# EUROPÄISCHE PATENTSCHRIFT

(11) **EP 0 498 493 B1**
(45) Veröffentlichungstag und Bekanntmachung des Hinweises auf die Patenterteilung: **03.04.1996**
(21) Anmeldenummer: 92200249.8
(22) Anmeldetag: 29.01.1992
(51) Int. Cl.: G11B 5/187, G11B 5/23

(54) **Magnetkopf**
Magnetic head
Tête magnétique

(30) Priorität: 04.02.1991 NL 9100192
(43) Veröffentlichungstag der Anmeldung: 12.08.1992
(73) Patentinhaber: Philips Electronics N.V., NL-5621 BA Eindhoven (NL)
(72) Erfinder: Sillen, Cornelis Wilhelmus Marie Peter, NL-5656 AA Eindhoven (NL); Dirne, Franciscus Wilhelmus Adrianus, NL-5656 AA Eindhoven (NL); Ruigrok, Jacobus Josephus Maria, NL-5656 AA Eindhoven (NL); Binder-Krieglstein, Wolfgang, NL-5656 AA Eindhoven (NL); Traxlmayr, Ulrich, NL-5656 AA Eindhoven (NL)
(74) Vertreter: Schrijnemaekers, Hubert Joannes Maria

(56) Entgegenhaltungen:
- EP-A- 0 273 496
- EP-A- 0 372 686
- US-A- 4 170 788
- PATENT ABSTRACTS OF JAPAN, Band 11, Nr. 22 (P-538)[2469], 21. Januar 1987; & JP-A-61 194 609
- PATENT ABSTRACTS OF JAPAN, Band 10, Nr. 116 (P-452)[2173], 30. April 1986; & JP-A-60 246 009
- PATENT ABTRACTS OF JAPAN, Band 11, Nr. 233 (P-600)[2680], 30. Juli 1987; & JP-A-62 046 409
- PATENT ABSTRACTS OF JAPAN, Band 14, Nr. 381 (P-1093)[4324], 16. August 1990; & JP-A-02 141 911
- PATENT ABSTRACTS OF JAPAN, Band 14, Nr. 15 (P-989)[3958], 12. Januar 1990; & JP-A-01 260 615
- PATENT ABSTRACTS OF JAPAN, Band 9, Nr. 236 (P-390)[1959], 21. September 1985; & JP-A-60 089 807
- PATENT ABSTRACTS OF JAPAN, Band 11, Nr. 270 (P-611)[2717], 3. September 1987; & JP-A-62 071 008

## Beschreibung

Die Erfindung bezieht sich auf einen Magnetkopf zum Aufzeichnen und/oder Wiedergeben magnetischer Information in einer Spur eines magnetischen Informationsträgers mit einem Magnetkern mit zwei aus einem Ferrit gebildeten Kernteilen, die zwei einander gegenüber liegende Kernflächen bilden, von denen mindestens eine mit einer Verkleidung aus weichmagnetischem Material mit einer höheren Sättigungsmagnetisierung als die des Ferrits versehen ist, sowie mit einer Stirnfläche, an der entlang der Informationsträger verschiebbar ist, und mit einem zwischen den Kernflächen vorgesehenen, in der Stirnfläche endenden, nicht magnetischen Übertragungsspalt mit mindestens einer Schicht aus einem ersten metallischen Material und mit miteinander verbundenen Schichten aus einem zweiten metallischen Material, wobei das erste metallische Material aus der Gruppe Mo, Ti, Cr und NiCr gewählt worden ist, und mit einer durch die Spulenkammer hindurchgehenden, um einen Teil des Magnetkerns vorgesehenen elektrischen Spule.

Ein derartiger Magnetkopf ist aus der EP-A-0 273 496 bekannt.

Es ist allgemein bekannt, Ferrit, wie monokristallines Mn-Zn-Ferrit, als magnetisches Kernmaterial für Magnetköpfe zu verwenden. Ferrite haben u.a. die Vorteile einer hohen Verschleißfestigkeit, eines relativ hohen spezifischen Widerstandes und guter magnetischer Eigenschaften in bezug auf die Koerzitivkraft und die Permeabilität.

Magnetfelder, die an der Stelle des Übertragungspaltes von einem Magnetkopf erzeugt werden um Information auf einem magnetischen Medium aufzuzeichnen, hängen unmittelbar von der Sättigungsmagnetisierung des Kernmaterials des Magnetkopfes ab. Ferrite haben im allgemeinen eine Sättigungsmagnetisierung, die zum Schreiben von Information auf herkömmliche Bänder, wie CrO₂-Bänder mit einer Koerzitivkraft H_{c} von etwa 700 Oe, ausreicht. Zum Aufzeichnen von Information auf Magnetbändern mit einer höheren Koerzitivkraft, wie ME-Magnetbänder auf Basis von Co-Ni, sind herkömmliche Magnetköpfe, die auf beiden Seiten des Übertragungsspaltes ausschließlich Ferrit aufweisen, weniger geeignet. Die zum Aufzeichnen von Information auf einem magnetischen Medium benutzten und von derartigen Magnetköpfen erzeugten Magnetfelder werden ja durch die relativ niedrige Sättigungsmagnetisierung des Ferrits beschränkt. Die Feldstärke des Schreibfeldes ist dadurch unzureichend um Magnetbänder mit einer hoher Koerzitivkraft optimal beschreiben zu können.

Ein stärkeres Schreibfeld wird mit dem in der genannten EPA 0 273 496 dargestellten Magnetkopf erreicht. Der dargestellte Magnetkopf ist mit einem zwischen zwei Kernteilen sich erstreckenden Übertragungsspalt versehen, der aus einer Anzahl Schichten aus nicht magnetischem Material zusammengestellt ist. Die Kernteile sind mit je einer dem Spalt zugewandten Kernfläche versehen, auf die eine Verkleidung aus Ni₈₀F₂₀ im Zerstäubungsverfahren aufgetragen ist. Auf jeder der Verkleidungen aus Ni₈₀Fe₂₀ ist eine Isolierschicht aus SiO₂ des Übertragungsspaltes angebracht. Jede der Isolierschichten ist mit einer Mo-Schicht versehen, und jede der Mo-Schichten enthält eine Au-Schicht, wobei die Au-Schichten durch Thermokompression miteinander verbunden sind.

In der EP-A-0 273 496 wird bemerkt, daß die SiO₂-Isolierschicht in dem Übertragungsspalt als Sperre zwischen dem weichmagnetischen Material der Verkleidung, die beispielsweise aus einer Legierung auf Basis von Ni-Fe oder Fe-Al-Si gebildet ist, und den metallischen Materialien des Übertragungsspaltes wirksam ist, wodurch eine elektrochemische Wechselwirkung zwischen der Verkleidung und dem Übertragungsspalt vermieden wird. Ein Nachteil der vorhandenen SiO₂-Isolierschicht ist die relativ mangelhafte Haftung an der Verkleidungsschicht.

Die Erfindung hat u.a. zur Aufgabe, den eingangs erwähnten Magnetkopf wenigstens im mechanischer Hinsicht zu verbessern.

Der erfindungsgemäße Magnetkopf weist dazu das Kennzeichen auf, daß die Verkleidung eine erste Verkleidungsschicht aus einer Legierung auf Ni-Fe-Basis und eine darauf angebrachte zweite Verkleidungsschicht aus einer amorphen Legierung auf Co-Ti- und/oder Zr- und/oder Hf-Nb- und/oder Ta-Basis aufweist, wobei das erste metallische Material des Übertragungsspaltes unmittelbar auf der amorphen Legierung der Verkleidung angebracht ist.

In dem auf diese Weise gebildeten MIG-Magnetkopf (= Metal-in-Gap-Magnetkopf) kann der Übertragungsspalt ausschließlich aus metallischen Schichten zusammengestellt sein. Das erste metallische Material ist in erster Linie als Haftschicht zwischen der amorphen Legierung der Verkleidung und dem zweiten metallischen Material des Übertragungsspaltes wirksam. Als zweites metallisches Material eignen sich Gold, Silber und Platin durchaus.

Dadurch, daß die mechanische Haftung zwischen der Verkleidung und dem Übertragungsspalt stark ist, wird die Möglichkeit geboten, bei der Fertigung des Magnetkopfes einen Laserstrahl zu verwenden, damit der Übertragungsspalt die gewünschte Spaltbreite erhält.

Eine der genannten möglichen amorphen Legierungen ist beispielsweise Co_{86.1}Zr_{2.9}NB_{11.0}, wobei dieses Material eine hohe Sättigungsmagnetisierung und Permeabilität sowie eine geringe Magnetostriktion hat.

Eine Ausführungsform des Magnetkopfes nach der Erfindung weist das Kennzeichen auf, daß in dem Übertragungsspalt zwischen der Schicht aus einem ersten metallischen Material und einer der Schichten aus einem zweiten metallischen Material eine zu der Verkleidung optisch kontrastierende Zwischenschicht vorgesehen ist. Auf diese Weise wird die Sichtbarkeit des Übertragungsspaltes verbessert, was bei der Herstellung des Magnetkopfes von Bedeutung ist, insbesondere damit mit Hilfe eines Lichtmikroskopen die Qualität des Übertragungsspaltes und/oder die Lage und/oder Bemessung des Spaltes beurteilt werden kann. Die Zwischenschicht ist vorzugsweise aus einem Oxid und/oder einem Nitrid gebildet.

Eine Ausführungsform des erfindungsgemäßen Magnetkopfes, wobei das zweite metallische Material des Übertragungsspaltes aus der Gruppe Au, Ag und Pt gewählt worden ist, weist das Kennzeichen auf, daß das Oxid der Zwischenschicht SiO₂, Al₂O₃ oder ZrO₂ ist.

Damit die Haftung bei einer vorhandenen optisch kontrastierenden Zwischenschicht verbessert wird, weist eine Ausführungsform das Kennzeichen auf, daß zwischen der optisch kontrastierenden Zwischenschicht und der Schicht aus einem zweiten metallischen Material eine weitere Schicht aus einem metallischen Material vorgesehen ist. Ausgezeichnete Ergebnisse werden erreicht, wenn das metallische Material der weiteren Schicht aus der Gruppe Mo, Ti, Cr und NiCr gewählt ist.

Eine Ausführungsform des erfindungsgemäßen Magnetkopfes weist das Kennzeichen auf, daß die erste Verkleidungsschicht aus einer Legierung auf Ni-Fe-Basis sich zwischen einer Kernfläche und der zweiten Verkleidungsschicht erstreckt, wobei die erste Verkleidungsschicht aus einer Legierung auf Ni-Fe-Basis auf einer auf der Kernfläche vorgesehenen Basisschicht aus einem Material aus der Gruppe Cr, Mo oder Titanoxid angeordnet ist. Die Basisschicht dient zur Verbesserung der mechanischen Haftung der Legierung auf Ni-Fe-Basis (Sendust) auf dem Ferrit des Magnetkerns.

Eine Ausführungsform des erfindungsgemäßen Magnetkopfes weist das Kennzeichen auf, daß die Übertragungsspaltbreite durch Anwendung einer Lasertechnik erzielt ist. Bisher war man der Meinung, daß MIG-Köpfe sich nicht zum Spaltbreitenlasern eignen.

Bei einem erfindungsgemäßen Magnetkopf können alle zwischen den Kernflächen liegenden Schichten eine gleiche Breite aufweisen. Als besonders vorteilhaft hat sich aber erwiesen, wenn die beiden Kernflächen und sämtliche zwischen diesen beiden Kernflächen liegenden Schichten parallel zueinander verlaufen und die Breite des Übertragungsspaltes kleiner ist als die der ersten Verkleidungsschicht. Hierdurch ist vorteilhafterweise erreicht, daß im Übertragungsspalt eine besonders hohe Flußdichte erhalten wird.

Ausführungsbeispiele der Erfindung sind in der Zeichnung dargestellt und werden im folgenden näher beschrieben. Es zeigen:
Fig. 1 eine schaubildliche Ansicht einer Ausführungsform des erfindungsgemäßen Magnetkopfes,
Fig. 2 einen vergrößerten Teil der Draufsicht des Magnetkopfes nach Fig. 1,
Fig. 3 eine schematische Darstellung eines Übertragungsspaltes einer anderen Ausführungsform des erfindungsgemäßen Magnetkopfes.

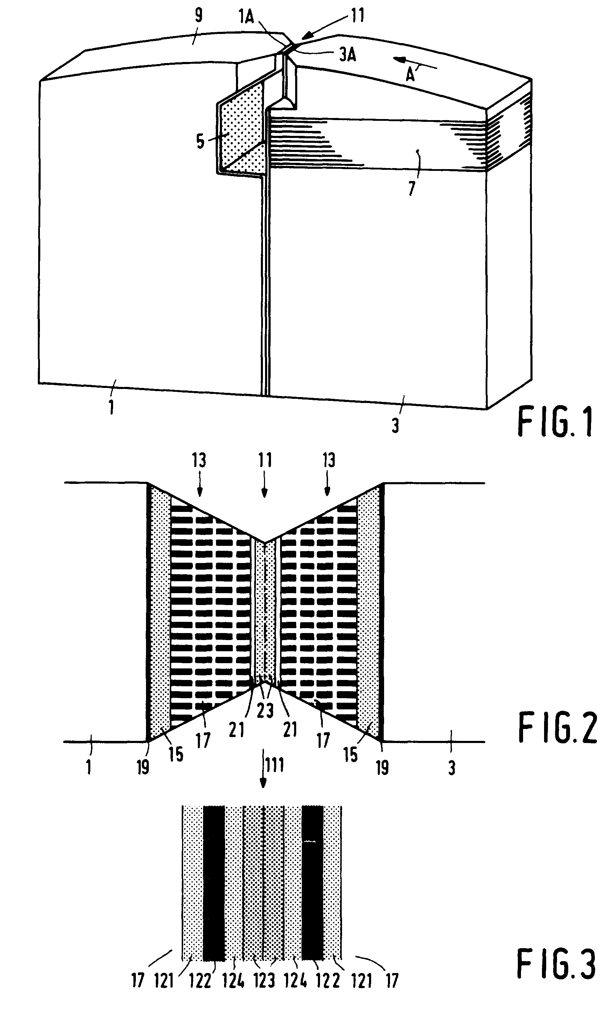

Der in den Fig. 1 und 2 dargestellte MIG-Kopf (metal-in-gap-head) nach der Erfindung eignet sich zum Beschreiben und Auslesen von Magnetbändern mit hoher Koerzitivkraft. Der Magnetkopf hat einen aus zwei Kernteilen 1 und 3 aufgebauten Magnetkern, in dem eine Spulenkammer 5 angeordnet ist. Um einen der Kernteile ist eine durch die Spulenkammer 5 hindurchgehende Spule 7 gewickelt. Die Kernteile 1 und 3, die aus einem Ferrit gebildet sind, beispielsweise aus polykristallinem Mn-Zn-Ferrit, bilden eine Stirnfläche 9, an der entlang im Betrieb des Magnetkopfes ein an dieser Stelle nicht dargestelltes Magnetband in der Richtung des dargestellten Teiles A verschoben wird. Zwischen den Kernteilen 1 und 3 befindet sich ein nicht magnetischer Übertragungsspalt 11, der sich bis an die Stirnfläche 9 erstreckt. Die Kernteile 1 und 3 haben je eine dem Spalt 11 zugewandte Kernfläche 1A bzw. 3A, auf der eine Verkleidung 13 aus weichmagnetischem Material mit einer höheren Sättigungsmagnetisierung als die des Ferrits angeordnet ist.

Die Verkleidung 13 auf jeder der Kernflächen 1A und 3A besteht aus einer ersten Verkleidungsschicht 15 aus einer Legierung auf Ni-Fe-Basis, beispielsweise Ni₈₀Fe₂₀, und einer zweiten Verkleidungsschicht 17 aus einer amorphen Legierung auf Co-Ti- und/oder Zr- und/oder Hf-Nb- und/oder Ta-Basis, beispielsweise Co_{86.1} Zr_{2.9} Nb_{11.0}. Zwischen den ersten Verkleidungsschichten 15 und den Kernteilen 1 und 3 befindet sich eine Basisschicht 19 aus einem Material aus der Gruppe Cr, Mo oder Titanoxid, beispielsweise Cr. Die Basisschicht 19 ist nicht unbedingt notwendig, dient jedoch zur Verbesserung der mechanischen Haftung zwischen den Kernteilen und den ersten Verkleidungsschichten.

Der Spalt 11 besteht aus zwei Schichten 21 aus einem ersten metallischen Material, das aus der Gruppe Mo, Ti, Cr und NiCr gewählt worden ist, und zwei Schichten 23 aus einem zweiten metallischen Material, das aus der Gruppe Au, Ag und Pt gewählt worden ist. In diesem Beispiel ist das erste metallische Material Mo und das zweite metallische Material Au. Die Schichten 21 sind unmittelbar, d.h. ohne jegliche Zwischenschicht, auf den zweiten Verkleidungsschichten 17 aus einer amorphen Legierung angeordnet. Die Schicht 21 ist als Diffusionssperre sowie als Haftschicht zwischen der amorphen Legierung und dem zweiten metallischen Material der Schichten 23 wirksam. Die Schichten 23 sind durch Thermokompression aneinander befestigt.

Das Verfahren zum Herstellen des in den Fig. 1 und 2 dargestellten erfindungsgemäßen Magnetkopfes weist das Kennzeichen auf, daß nacheinander auf jedem der Kernteile 1 und 3 eine erste Verkleidungsschicht 15 aus einer Legierung auf Ni-Fe-Basis, eine zweite Verkleidungsschicht 17 aus einer amorphen Legierung einer bereits benannten Zusammensetzung, eine Schicht 21 aus einem ersten metallischen Material und eine Schicht 23 aus einem zweiten metallischen Material angebracht wird, wonach die beiden Schichten 23 unter erhöhtem Druck und erhöhter Temperatur aneinander befestigt werden, wonach mit Hilfe einer Lasertechnologie die gewünschte Spaltbreite erzielt wird. Gewünschtenfalls kann bevor die ersten Verkleidungsschichten 15 angebracht werden, auf den Kernflächen 1A und 3A eine als Haftschicht wirksame Basisschicht 19 angebracht werden. Alle Schichten werden vorzugsweise durch Kathodenzerstäubung angebracht.

Der in Fig. 3 auf schematische Weise dargestellte Spalt 111 befindet sich zwischen zwei zweiten Verkleidungsschichten 17 einer Verkleidung, die der Verkleidung des Magnetkopfes in den Fig. 1 und 2 entspricht bzw. dieser Verkleidung ähnlich ist. Der Übertragungsspalt 111 besteht aus zwei unmittelbar auf den zweiten Verkleidungsschichten 17 angebrachten Schichten 121 aus einem ersten metallischen Material, zwei darauf angebrachten Zwischenschichten 122 aus einem zu der Verkleidung optisch kontrastierenden Material, beispielsweise SiO₂, zwei auf den Zwischenschichten 122 angebrachten weiteren Schichten aus einem metallischen Material und zwei aufden weiteren Schichten 124 angebrachten Schichten 123 aus einem zweiten metallischen Material. Das erste metallische Material der Schichten 121 und das metallische Material der weiteren Schichten 124 ist aus der Gruppe Mo, Ti, Cr und NiCr gewählt worden. Das zweite metallische Material der Schichten 123 ist aus der Gruppe Au, Ag und Pt gewählt worden. Die Schichten 123 sind durch Thermokompression aneinander befestigt.

## Patentansprüche

1. Magnetkopf zum Aufzeichnen und/oder Wiedergeben magnetischer Information in einer Spur eines magnetischen Informationsträgers mit
- einem Magnetkern mit zwei aus einem Ferrit gebildeten Kernteilen (1, 3), die zwei einander gegenüber liegende Kernflächen bilden (1A, 3A), von denen mindestens eine mit einer Verkleidung (13) aus weichmagnetischem Material mit einer höheren Sättigungsmagnetisierung als die des Ferrits versehen ist,
- einer Stirnfläche (9), der entlang der Informationsträger verschiebbar ist,
- einem zwischen den Kernflächen vorgesehenen, in der Stirnfläche (9) endenden, nicht magnetischen Übertragungsspalt (11, 111) mit mindestens einer Schicht (21, 121) aus einem ersten metallischen Material und mit miteinander verbundenen Schichten (23, 123) aus einem zweiten metallischen Material, wobei das erste metallische Material aus der Gruppe Mo, Ti, Cr und NiCr gewählt worden ist, und
- einer durch eine Spulenkammer (5) hindurchgehenden, um einen Teil des Magnetkerns (3) vorgesehenen elektrischen Spule (7),
dadurch gekennzeichnet, daß die Verkleidung (13) eine erste Verkleidungsschicht (15) aus einer Legierung auf Ni-Fe-Basis und eine darauf angebrachte zweite Verkleidungsschicht (17) aus einer amorphen Legierung auf Co-Ti- und/oder Zr- und/oder Hf-Nb- und/oder Ta-Basis aufweist, wobei das erste metallische Material (21, 121) des Übertragungsspaltes (11, 111) unmittelbar auf der amorphen Legierung der Verkleidung (17) angebracht ist.

2. Magnetkopf nach Anspruch 1, dadurch gekennzeichnet, daß in dem Übertragungsspalt (111) zwischen der Schicht (121) aus einem ersten metallischen Material und einer der Schichten (123) aus einem zweiten metallischen Material eine zu der Verkleidung optisch kontrastierende Zwischenschicht (122) vorgesehen ist.

3. Magnetkopf nach Anspruch 2, dadurch gekennzeichnet, daß die Zwischenschicht (122) aus einem Oxid und/oder einem Nitrid gebildet ist.

4. Magnetkopf nach Anspruch 2 und 3, wobei das zweite metallische Material des Übertragungsspaltes (111) aus der Gruppe Au, Ag und Pt gewählt worden ist, dadurch gekennzeichnet, daß das Oxid der Zwischenschicht (122) SiO₂, Al₂O₃ oder ZrO₂ ist.

5. Magnetkopf nach Anspruch 2, 3 oder 4, dadurch gekennzeichnet, daß zwischen der optisch kontrastierenden Zwischenschicht (122) und der Schicht (123) aus einem zweiten metallischen Material eine weitere Schicht (124) aus einem metallischen Material vorgesehen ist.

6. Magnetkopf nach Anspruch 4 und 5, dadurch gekennzeichnet, daß das metallische Material der weiteren Schicht (124) aus der Gruppe Mo, Ti, Cr und NiCr gewählt worden ist.

7. Magnetkopf nach einem der Ansprüche 1 bis 6, dadurch gekennzeichnet, daß die erste Verkleidungsschicht (15) aus einer Legierung auf Ni-Fe-Basis sich zwischen einer Kernfläche (1A, 3A) und der zweiten Verkleidungsschicht (17) erstreckt, wobei die erste Verkleidungsschicht (15) aus einer Legierung auf Ni-Fe-Basis auf einer auf der Kernfläche (1A, 3A) vorgesehenen Basisschicht (19) aus einem Material aus der Gruppe Cr, Mo oder Titanoxid angeordnet ist.

8. Magnetkopf nach einem der vorstehenden Ansprüche 1 bis 8, dadurch gekennzeichnet, daß die beiden Kernflächen (1A, 3A) und sämtliche zwischen diesen beiden Kernflächen (1A, 3A) liegenden Schichten parallel zueinander verlaufen und die Breite des Übertragungsspaltes (11, 111) kleiner ist als die der ersten Verkleidungsschicht (15).

## Claims

1. A magnetic head for recording and/or reproducing magnetic information in a track of a magnetic information carrier, comprising
- a magnetic core having two core limbs (1, 3) formed from a ferrite, which core limbs constitute two core faces (1A, 3A) located opposite each other, at least one of said core faces having a cladding (13) of a soft-magnetic material having a higher saturation magnetisation than the ferrite,
- a tape contact face (9) along which the information carrier is movable,
- a non-magnetic transducing gap (11, 111) present between the core faces and terminating in the tape contact face (9), which gap has at least one layer (21, 121) of a first metallic material and bonded layers (23, 123) of a second metallic material, the first metallic material being chosen from the group of Mo, Ti, Cr and NiCr, and
- an electric coil (7) passing through a winding aperture (5) and surrounding a part of the magnetic core (3),
characterized in that the cladding (13) comprises a first cladding layer (15) of an alloy based on Ni-Fe on which a second cladding layer (17) of an amorphous alloy based on Co-Ti and/or Zr and/or Hf-Nb and/or Ta is provided, the first metallic material (21, 121) of the transducing gap (11, 111) being directly provided on the amorphous alloy of the cladding (17).

2. A magnetic head as claimed in Claim 1, characterized in that an intermediate layer (122) optically contrasting to the cladding is present in the transducing gap (111) between the layer (121) of a first metallic material and one of the layers (123) of a second metallic material.

3. A magnetic head as claimed in Claim 2, characterized in that the intermediate layer (122) is formed from an oxide and/or a nitride.

4. A magnetic head as claimed in Claims 2 and 3, in which the second metallic material of the transducing gap (111) is chosen from the group of Au, Ag and Pt, characterized in that the oxide of the intermediate layer (122) is SiO₂, Al₂O₃ or ZrO₂.

5. A magnetic head as claimed in Claim 2, 3 or 4, characterized in that a further layer (124) of a metallic material is present between the optically contrasting intermediate layer (122) and the layer (123) of a second metallic material.

6. A magnetic head as claimed in Claims 4 and 5, characterized in that the metallic material of the further layer (124) is chosen from the group of Mo, Ti, Cr and NiCr.

7. A magnetic head as claimed in any one of Claims 1 to 6, characterized in that the first cladding layer (15) of an alloy based on Ni-Fe extends between a core face (1A, 3A) and the second cladding layer (17), the first cladding layer of an alloy based on Ni-Fe being provided on a base layer (19) which is provided on the core face (1A, 3A), said base layer being composed of a material chosen from the group of Cr, Mo or titanium oxide.

8. A magnetic head as claimed in any one of the preceding Claims 1 to 8, characterized in that the two core faces (1A, 3A) and all layers between said two core faces (1A, 3A) extend parallel to one another and in that the transducing gap (11, 111) has a smaller width than the first cladding layer (15).

## Revendications

1. Tête magnétique pour l'enregistrement et/ou la reproduction d'information magnétique dans une piste d'un support d'information magnétique comportant
- un noyau magnétique muni de deux parties de noyau en ferrite (1, 3) qui constituent deux faces de noyau opposées (1A, 3A) dont au moins l'une est munie d'un revêtement (13) en matériau magnétique doux présentant une saturation magnétique supérieure à celle du ferrite,
- une face terminale (9) le long de laquelle peut être déplacé le support d'information,
- un entrefer de transmission non magnétique (11, 111) prévu entre les faces de noyau, se terminant dans la face terminale (9) et muni d'au moins une couche (21, 121) en un premier matériau métallique et de deux couches reliées entre elles (23, 123) en un deuxième matériau métallique, le premier matériau métallique étant choisi dans le groupe comprenant Mo, Ti, Cr et NiCr et
- une bobine électrique (7) prévue autour d'une partie du noyau magnétique (3) et traversant une chambre de bobine (5), caractérisée en ce que le revêtement (13) présente une première couche de revêtement (15) en un alliage à base de Ni-Fe sur laquelle est appliquée une deuxième couche de revêtement (17) en un alliage amorphe à base de Co-Ti et/ou Zr et/ou Hf-Nb et/ou Ta, le premier matériau métallique (21, 121) de l'entrefer de transmission (11, 111) étant appliqué de façon directe sur l'alliage amorphe du revêtement (17).

2. Tête magnétique selon la revendication 1, caractérisée en ce que dans l'entrefer de transmission (111), entre la couche (121) en un premier matériau magnétique et l'une des couches (123) en un deuxième matériau métallique est prévue une couche intermédiaire (122) en un deuxième matériau magnétique formant un contraste optique avec le revêtement.

3. Tête magnétique selon la revendication 2, caractérisée en ce que la couche intermédiaire (122) est formée en un oxyde et/ou un nitrure.

4. Tête magnétique selon la revendication 2 et 3, dans laquelle le deuxième matériau métallique de l'entrefer de transmission (111) est choisi dans le groupe comprenant Au, Ag et Pt, l'oxyde de la couche intermédiaire étant SiO₂, Al₂O₃ ou ZrO₂.

5. Tête magnétique selon la revendication 2, 3 ou 4, caractérisée en ce qu'entre la deuxième couche intermédiaire de contraste optique (122) et la couche (123) en un deuxième matériau métallique est prévue une autre couche (124) en un matériau métallique.

6. Tête magnétique selon la revendication 4 et 5, caractérisée en ce que le matériau magnétique de l'autre couche (124) est choisi dans le groupe comprenant Mo, Ti, Cr et NiCr.

7. Tête magnétique selon l'une des revendications 1 à 6, caractérisée en ce que la première couche de revêtement (15) réalisée en un alliage à base de Ni-Fe s'étend entre une face de noyau (1A, 3A) et la deuxième couche de revêtement (17), la première couche de revêtement (15) en un alliage à base de Ni-Fe étant appliquée sur une couche de base (19) prévue sur la face de noyau (1A, 3A) et réalisée en un matériau choisi dans le groupe comprenant Cr, Mo ou oxyde de titane.

8. Tête magnétique selon l'une des revendications précédentes 1 à 8, caractérisée en ce que les deux faces de noyau (1A, 3A) et toutes les couches situées entre ces deux faces de noyau (1A, 3A) s'étendent parallèlement et la largeur de l'entrefer de transmission (11, 111) est inférieure à celle de la première couche de revêtement (15).
